# EUROPÄISCHE PATENTSCHRIFT

(11) **EP 2 385 607 B1**
(45) Veröffentlichungstag und Bekanntmachung des Hinweises auf die Patenterteilung: **07.03.2018**
(21) Anmeldenummer: 11003311.5
(22) Anmeldetag: 20.04.2011
(51) Int. Cl.: H02J 7/35, H02J 3/38

(54) **Photovoltaiksystem mit gezielter Fehlanpassung an den MPP**
Photovoltaic system with targeted error adjustment to the MPP
Installation photovoltaïque dotée d'une adaptation d'erreur ciblée à l'unité MPP

(30) Priorität: 03.05.2010 DE 102010019267
(43) Veröffentlichungstag der Anmeldung: 09.11.2011
(73) Patentinhaber: Adensis GmbH, 01129 Dresden (DE)
(72) Erfinder: Beck, Bernhard, 97509 Kolitzheim (DE)
(74) Vertreter: Bauer, Daniel

(56) Entgegenhaltungen:
- EP-A1- 2 426 570
- DE-A1-102009 025 363
- US-B2- 7 072 194
- Anonymous: "Solarwechselrichter - Wikipedia", , 8 April 2011 (2011-04-08), XP055345816, Retrieved from the Internet: URL:https://de.wikipedia.org/w/index.php?t itle=Solarwechselrichter&oldid=87436159 [retrieved on 2017-02-14]

## Beschreibung

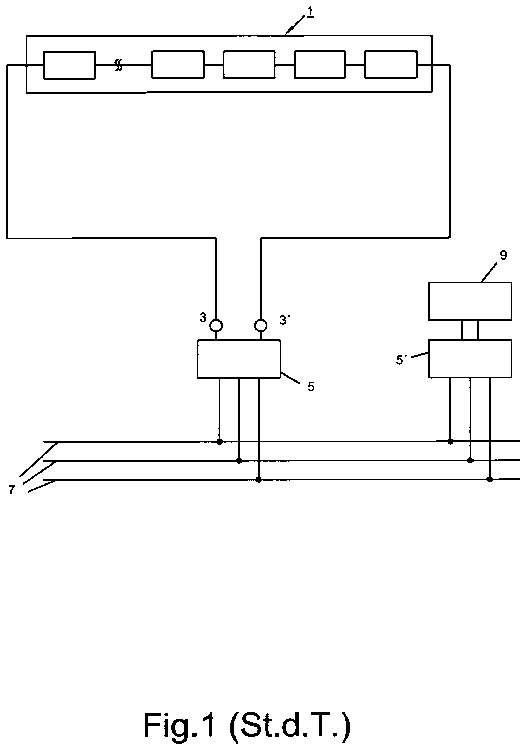

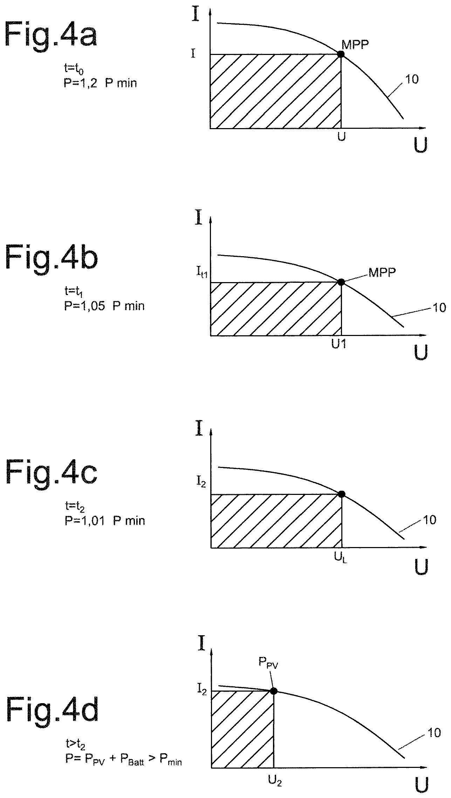

Die Erfindung betrifft ein Verfahren und eine Vorrichtung zum Betrieb einer Photövoltaikanlage mit einem Wechselrichter, an dessen Eingangsklemmen die Ausgangsgleichspannung der Photovoltaikanlage gelegt ist und dessen Ausgang mit einem Versorgungsnetz verbindbar ist, und mit einer parallel zu den Eingangsklemme geschalteten Batteriebank, wobei der Wechselrichters mit einem Regelelement zum Einstellen des maximalen Leistungspunkts (MPP) der Photovoltaikanlage versehen ist.
Bei Errichtung von Solarkraftwerken ist es in den Abnahmeverträgen mit dem zugehörigen Energieversorger zum Teil vorgesehen, eine verträglich zugesicherte Mindestleistung innerhalb einer festgelegten Zeitspanne in das Versorgungsnetz einzuspeisen. So z.B. kann bei einem 2,4 Megawatt Solarkraftwerk gefordert werden, dass zwischen 11.00 Uhr und 17.00 Uhr eine Leistung von mindestens 60 Prozent, also ca. 1,5 Megawatt einzuspeisen ist. Je nach Wetterlage ist die Mindestleistung nicht immer allein von der Solaranlage erzeugbar und es müssen Ersatzkraftwerke auf Gleichstrombasis, wie z.B. eine Batterie oder eine Brennstoffzelle hinzu geschalten werden. Bei längerer prognostizierter Energieminderung muss dann auf der AC Seite ein Zusatzkraftwerk in die Pflicht genommen werden. Dies geschieht entweder durch Zukauf der Energiemenge bei einem anderen Energielieferanten oder durch Zuschalten eines Zusatzkraftwerkes auf der Wechselstromseite, z.B. in Form eines Dieselgenerators oder eines Gaskraftwerkes. Die in Frage kommenden Energielieferanten haben unterschiedliche Rüstzeiten, bis ihre Energie eingespeist werden kann. Dies reicht von quasi unmittelbar bei Entladen einer Batterie bis hin zu ca. 5 Minuten für das Anfahren eines Zusatzkraftwerks.
Aus dem Stand der Technik ist eine Anlage gemäß der Figur 1 bekannt, bei der ein Photovoltaikgenerator, im folgenden auch kurz PV-Generator 1 genannt, in üblicher Weise auf die Eingangsklemmen 3,3'eines Wechselrichters 5 geschaltet ist, an dessen Ausgang ein Versorgungsnetz 7 angeschlossen ist. An das Versorgungsnetz 7 ist ein zweiter Wechselrichters 5' angebunden, dessen Gleichspannungsseite zu einer Batterie oder Batteriebank 9 führt. Reicht die vom PV-Generator erbrachte Leistung nicht aus, so wird die Batterie über den-zweiten Wechselrichter 5' in das Netz entladen und unterstützt so die minder leistende PV-Anlage 1. Die entleerte Batterie 9 wird anschließend mittels der Netzspannung wieder aufgeladen. Nachteilig bei dieser Anordnung ist zum einen, dass zwei Wechselrichter 5,5' erforderlich sind, was die Investitionskosten erhöht. Zum anderen werden im zweiten Wechselrichter 5' bei dessen Aufladung aus dem Versorgungsnetz 7 elektrische Verluste anfallen, die ebenfalls bezahlt werden müssen. Im Ergebnis werden zwei Wechselrichter 5,5'eingesetzt, um in der PV-Anlage generierten Gleichstrom wieder in die Batterie zu laden. Eine derartige Lösung ist zum Beispiel aus der US 7,072, 194 B2 bekannt. Ferner ist aus einer nachveröffentlichten Schrift (EP 2 426 570 A1) ein Leistungswandler bekannt, der einen DC/DC Wandler sowie einen Wechselrichter umfässt. Die Ausgangsgleichspannung eines Photovoltaikgenerators ist dabei an den DC/DC-Wandler angelegt ebenso wie eine parallel geschaltete Batteriebank. DER DC/DC-Wandler versorgt einerseits eine elektrische Gleichspannungslast und kann andererseits zur Netzeinspeisung über den Wechselrichter verwendet werden.
Entsprechend liegt vorliegender Erfindung die Aufgabe zugrunde, das eingangs genannte Verfahren und die eingangs genannte Vorrichtung mit einem geringen technischen Aufwand so zu modifizieren, dass eine im Betrieb günstige, kurzfristig verfügbare Aufrechterhaltung einer festgelegten Mindestleistung ohne den Einsatz eines zweiten Wechselrichters oder anderer kostenintensiver Bauteile ermöglicht wird
Diese Aufgabe wird dadurch gelöst, dass die Phötövoltäikanlage unter Ausschaltung der ansonsten eingestellten Regelung auf den maximaten Leistungspunkt (MPP) zu, gezielt fehl angepasst betrieben wird, um im Falle einer nicht erreichten vorgebbaren Mindestleistung der Photovoltaikanlage einen Entladestrom aus der Batteriebank zu den Eingangsklemmen des Wechselrichters hin zu provozieren. Die Fehlanpassung besteht darin, däss der über den MPP-Regler eingestellte Spannungswert auf einen kleineren Spannungswert gesetzt wird, als er zum aktuellen, für die herrschenden Verhältnisse errechneten maximalen Leistungspunkt gehören würde. Je nach Größe des Spannungsunterschieds zwischen der vorliegenden Batteriespannung und der eingestellten PV-Spannung wird ein gewünschter zusätzlicher Strom in den Wechselrichter fließen und als Wechselstrom umgerichtet an das Versorguhgsnetz abgegeben werden. Dieses wird nochmals später anhand der Figur 4 erläutern. Durch den kleineren Spannungswert wird die parallel zur PV-Anlage geschaltete Batteriebank entladen und zu dem von der PV-Anlage generierten Strom addiert sich der Entladestrom seitens der Batterie. Der Leistungsverlust bei der PV-Anlage aufgrund der Fehlanpassung wird dabei in Kauf genommen. Die Realisierung der Fehlanpassung mittels des ohnehin vorhandenen MPP-Regelelements erfordert außer einem bei Bedarf abrufbaren, geänderten Regelalgorithmus keine weiteren Investitionen in Soft- und Hardware.

Ein vorteilhaftes Vorgehen zum Einleiten der Fehlanpassung sieht vor, dass zunächst derjenige Spannungspunkt auf der charakteristischen U/I-Kennlinie des Wechselrichters eingestellt wird, der im wesentlichen der aktuellen Leerlaufspannung über der Batteriebank entspricht, anschließend ein Trennschalter, der im Strompfad der Anschlussleitung der Batteriebank an den Wechselrichter liegt, geschlossen wird, und schließlich der Arbeitspunkt des MPP -Regelelements auf einen Spannungswert kleiner als die aktuelle Spannung der Batteriebank gesetzt wird. Diese Vorgehensweise stellt einen weichen Übergang zur Batterieeinspeisung sicher und vermeidet einen nennenswerten Ausgleichsstrom. Die Spannung an der PV-Anlage, manchmal auch PV-Generator genannt, wird also zunächst auf den Wert der herrschenden Leerlaufspannung der Batteriebank gesetzt, dann wird der Trennschalter geschlossen. Da alle drei mittels des Trennschalters parallel geschalteten Zweige (i. der PV-Generator, ii. die Batteriebank und iii. der Wechselrichter) dann mit der gleichen Spannung beaufschlagt sind, fließt kein Ausgleichsstrom. Anschließend wird der Spannungswert durch das MPP - Regelelement auf den bezüglich der PV-generierten Maximalleistung an sich fehl angepassten Wert gebracht. Diese kann in kleinen Schritten stattfinden, wobei der im Batteriepfad fließende Strom gemessen wird und in Abhängigkeit des Messergebnisses die Spannung belassen oder weiter reduziert wird.

Die Beendigung der Fehlanpassung kann zum Beispiel nach dem "try and error" Prinzip erfolgen, indem zwischenzeitlich immer wieder, z.B. in Abständen von 30 Sekunden die Einspeiseleistung der Batteriebank zurückgenommen oder gänzlich eingestellt wird, um die Information zur Photovoltaik-seitigen Momentanleistung zu erlangen. Vorzuziehen ist es jedoch, wenn der von der Photovoltaik-Anlage generierte Strom mittels eines ersten Strommesssensors gemessen wird und die Fehlanpassung beendet wird, wenn der vom ersten Strommesssensor gemessene Strom einen Grenzwert überschreitet. Der Grenzwert kann dabei in Abhängigkeit von der zu sichernden Mindestleistung und der fehlangepassten Spannung am MPP-Regelelement variieren.

Um immer sofort wieder eine geladene Batteriebank einsatzbereit zu haben, ist es vorgesehen, dass nach der Beendigung der Fehlanpassung der Trennschalter zum Zwecke der Aufladung der Batteriebank weiterhin geschlossen bleibt, bis ein vorgebbarer Ladungszustand der Batteriebank gemessen wird.

Je nach den zwischen dem Stromerzeuger und dem Stromabnehmer getroffenen Vereinbarungen kann es nötig sein, einen weiteren Energielieferanten in der Hinterhand zu haben. Ist der Stromabnehmer mit einer rechtzeitigen Warnung mit einer Vorlaufzeit von einigen Minuten einverstanden, braucht es diese Maßnahme nicht. Der Stromabnehmer kann dann selber Vorsorge treffen, indem er z.B. zur Zeit nicht benötigte Maschinen abschaltet und erst später wieder laufen lässt. Im anderen Fall der permanent vorliegenden garantierten Mindestleistung ist es vorgesehen, in der Zuleitung zwischen der Batteriebank und dem Wechselrichter einen zweiten Strommesssensor vorzusehen und bei Unterschreiten eines vorgegebenen Ladungszustandes der Batteriebank die Zuschaltung eines Ersatzkraftwerks auf das Versorgungsnetz einzuleiten. Ein anderes Kriterium als der Ladungszustand könnte zum Beispiel das Integral über den Batterieseitig eingespeisten Zusatzstrom sein.

Bezüglich der Vorrichtung wird die gestellte Aufgabe dadurch gelöst, dass die Batteriebank über einen Trennschalter mit dem Wechselrichter verbunden ist und mit einer Steuer- und Regeleinrichtung, die den Arbeitspunkt des Wechselrichters unter Ausschaltung der Regelung auf den maximalen Leistungszeitpunkt durch das MPP-Regelelement auf eine vorgebbare Spannung setzt und die den Trennschalter bei Unterschreiten einer vorgegebenen Mindestleistung schließt. Auch hier gilt, das durch den kleineren Spannungswert die parallel zur Photovoltaik-Anlage geschaltete Batteriebank entladen wird und zu dem von der Photovoltaik-Anlage generierten Strom addiert sich der Entladestrom seitens der Batterie her.

Zur Wahrnehmung der im Zusammenhang mit dem Verfahren beschriebenen zusätzlichen Maßnahmen weist die Vorrichtung in dem Strompfad der Batteriebank zum Wechselrichter einen ersten Strommesssensor und im Strompfad zwischen dem Wechselrichter und der Photovoltaikanlage einen zweiten Strommesssensor oder eine Diode auf. Analog ist die Vorrichtung mit einer Steuereinheit versehen, die in Zusammenwirken mit dem MPP-Regelelement des Wechselrichters die Gleichspannung an den Eingangsklemmen so einstellt, dass ein gewünschter Strom aus oder zur Batteriebank fließt.

Im Strompfad der Reihenschaltung der Batterien ist ein Strommesssensor vorgesehen, der mit einer Steuereinheit verbunden ist, die in Zusammenwirken mit der MPP-Regelvorrichtung des Wechselrichters die Gleichspannung an den Eingangsklemmen so einstellt, dass ein gewünschter Strom aus oder zur Batteriebank fließt. Die gewünschte Höhe des Entladestroms ist dabei das ausschlaggebende Kriterium, unabhängig von der Fehlanpassung an der Photovoltaik-Anlage, die mit der aufgeprägten reduzierten Spannung betrieben wird. Analog kann überschüssige Energie der Photovoltaik-Anlage durch Einstellung eines geeigneten MPP Werts in die Batteriebank geladen werden.

Weitere Vorteile und Ausgestaltungen der Erfindung ergeben sich aus der Beschreibung eines Ausführungsbeispiels anhand der Figuren. Es zeigen:
- Figur 1: die Anordnung einer Zusatzbatterie nach dem Stand der Technik;
- Figur 2: einen typischen Strom/Spannungszusammenhang einer Photovoltaik-Anlage;
- Figur 3: eine Ausführungsform der Erfindung; und
- Fig. 4a-4d: Betriebszustände der MPP-Regelvorrichtung zu unterschiedlichen Zeitpunkten der Verfahrensführung.

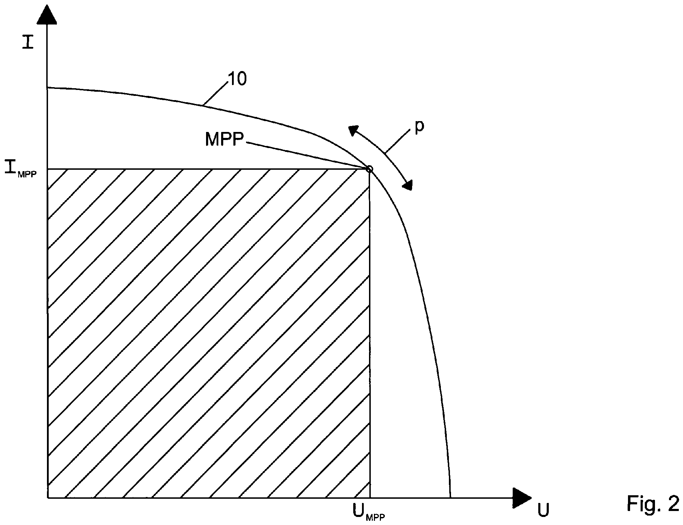

Zunächst ist anzumerken, dass ein Wechselrichter zwar eine hohe Effizienz bei der Energieumsetzung hat, jedoch aufgrund seiner großen Kapazitäten relativ träge ist, um die von den Photovoltaikmodulen erzeugte Leistung an den maximalen Leistungspunkt zu bringen. In der erläuternden Figur 2 ist eine typische Strom/Spannungskurve 10 einer Photovoltaikanlage dargestellt. Diese Kurve weist einen maximalen Leistungspunkt (MPP) auf, bei dem die schraffiert dargestellte Fläche eine maximale Größe entsprechend einer maximalen zur Verfügung gestellten Leistung aufweist. Die Regelung des Wechselrichters erfolgt durch eine iterative Annäherung an diesen Leistungspunkt MPP, indem entlang des Doppelpfeils P vor- und zurückgeregelt wird, bis man auf den MPP gelangt. Je nach Sonneneinstrahlung, Temperatur der Halbleiterelemente etc. ändert sich dieser MPP fortlaufend und die Regelung muss permanent einen neuen MPP suchen und einstellen. Dabei steht das träge Regelverhalten des Wechselrichters einem zügigen Nachlaufverhalten zum aktuellen MPP im Wege. Derzeit müssen zwischen 20 Sekunden und 3 Minuten angesetzt werden, bis ein Wechselrichter an eine momentan vorliegende Sonnenenergieeinstrahlung angepasst ist. Entweder Wetter bedingt oder auch durch diese Trägheit wird möglicherweise eine Leistungsabgabe unterhalb der erforderlichen Mindestleistung generiert, was durch die erfindungsgemäßen Maßnahmen kompensiert wird.

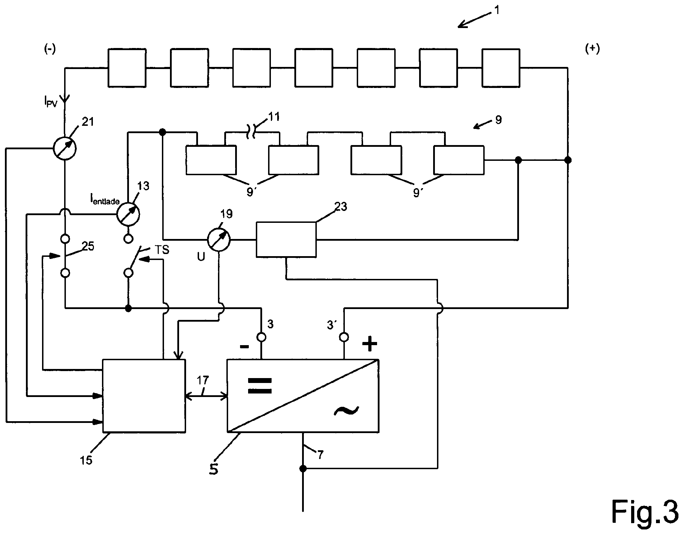

Unter einer Batteriebank im Sinne vorliegender Erfindung wird dabei jedwede Form und Größe von Speichermitteln für elektrische Energie verstanden. Die Batteriebank 9 besteht im gezeigten Ausführungsbeispiel nach der Figur 3 aus zehn Batterien 9', die ihrerseits wieder eine Vielzahl von parallel und in Reihe geschalteten Einzelbatterien aufweisen können. Hinter der ersten Batterie 9' ist eine Schnittwelle 11 gezeigt und die letzten drei elektrisch zum Pluspol der PV-Anlage und des Wechselrichters 5 weisenden Batterien 9' sind wieder dargestellt. An beliebiger Stelle im Stromzweig der Batterien 9', vorzugsweise in der Anschlussleitung der Batteriebank 9 zu dem Wechselrichter 5, ist ein erster Strommesssensor 13 vorgesehen, der den von oder zu der Batteriebank 9 fließenden Strom misst. Der Strommesssensor 13 gibt sein Messsignal an eine Steuereinheit 15 weiter, die über eine Signalleitung 17 im Datenaustausch mit dem Wechselrichter 5 steht. In dem Wechselrichter 5 ist eine auf dem einschlägigen Fachgebiet sattsam bekannte MPP (**M**aximum **P**ower **P**oint) - Regeleinrichtung (anhand der Figur 2 erläutert) vorgesehen, die den Arbeitspunkt der PV-Anlage 1 entlang der in der Figur 2 gezeigten Kurve führt. Dabei sind Eingriffe in die MPP-Regeleinrichtung möglich, indem z.B. vorgeschrieben wird, auf welchen Spannungswert die Spannung zwischen den Eingangsklemmen 3,3' und damit an der PV-Anlage gefahren wird. Diese Spannung sollte in der Nähe der Batterienennspannung von z.B. 600 Volt liegen, um Ausgleichsströme von und zu der Batteriebank 9 im regulären Betrieb gering zu halten. Dies gilt allerdings nur, wenn die Batterie 9 in die Parallelschaltung von PV-Anlage 1 und Wechselrichtereingang 3,3 eingebunden ist. Ansonsten ist ein normaler Betrieb der PV-Anlage 1 ohne möglicherweise einschränkende Kriterien möglich.

Unter Zuhilfenahme der Figuren 3, 4a bis 4d ist im Folgenden der Einsatz der Batteriebank 9 beschrieben. Ausgegangen wird dabei von einem Zustand gemäß der Figur 4a, bei dem die PV-Anlage zum Zeitpunkt t0 ohne eine Verschattung zu betreiben ist und eine Leistung P von dem 1,2 fachen der geforderten Mindestleistung Pₘᵢₙ liefert. Zum Zeitpunkt t1 wird über den allen PV-Anlagen inhärenten Leistungsmesser (nicht gezeigt) der PV-Anlage eine drohende Unterschreitung der garantierten Mindestleistung festgestellt, weil nur noch eine Leistung P von dem 1,05 fachen der Mindestleistung Pmin photovoltaisch erzeugt wird. Die drohende Unterschreitung kann z.B. über eine Strommessung am ersten Strommesssensor 13 in Kombination mit einer Spannungsmessung mittels eines die beiden Enden der Batteriebank 9 abgreifenden Spannungsmessers 19 erfolgen. Als drohende Unterschreitung kann z.B. definiert sein, dass die PV-seitig generierte Leistung nur noch zwischen 3 % und 10 % von der Mindestleistung entfernt ist. Am gezeigten Ausführungsbeispiel soll dies bei einem Zustand nach der Figur 4b der Fall sein, bei dem sich zu einem Zeitpunkt t1 der MPP zu einem Wert höherer Spannung U₁ verschoben hat, wodurch auch ein geringerer Strom I₁ fließt. Deren Produkt U₁ x I₁ = P1 entspricht zwar der maximal möglichen Fläche bei der herrschenden Temperatur und Sonneneinstrahlung, ist aber dennoch lediglich nur noch fünf Prozent von der geforderten Mindestleistung Pₘᵢₙ entfernt.

Es liegt also eine drohende Unterschreitung vor, woraufhin erfindungsgemäß zu einem t2 genannten Zeitpunkt, der in der Figur 4c dargestellt ist, die MPP - Regeleinrichtung den Spannungswert U an den Eingangsklemmen 3,3' des Wechselrichters 5 auf den mittels des Spannungsmessgeräts 19 gemessenen Wert der Leerlaufspannung U_{L} der Batteriebank 9 einstellt. Diese Maßnahme führt zu einem zugehörigen Stromwert I₂ auf der charakteristischen U/I Kennlinie 10, was einer Fehlanpassung an den ansonsten wünschenswerten MPP darstellt. Das Produkt P_{L} = U_{L} x I₂ bedeutet aufgrund der Fehlanpassung eine weitere Absenkung der Leistung P, in dem Beispielfall auf einen Wert von nur noch dem 1,01-fachem der Mindestleistung Pₘᵢₙ.

Durch den Zwischenschritt nach der Figur 4c ist sichergestellt, dass die Spannung über den PV-Generator 1 und dem parallel geschalteten Eingängen 3,3' auf denselben Wert liegen wie der der Batteriebank 9, woraufhin ein Trennschalter TS von der Steuer- und Regeleinheit 15 geschlossen wird. Das Schließen des Trennschalters TS bewirkt, dass auch die Batteriebank 9 parallel zu den Eingängen 3,3' geschaltet wird. Aufgrund der angepassten Spannung des MPP - Regelkreises an die Leerlaufspannung U_{L} wird, wenn überhaupt, nur ein geringer Ausgleichsstrom fließen. Wo die Spannung U₁ zum Zeitpunkt der Bedarfsfeststellung gelegen ist, ist dabei unerheblich. Die Spannung U₁ kann ebenso gut links vom MPP gewesen sein. Wichtig ist, dass sie von dort wo sie aktuell lag auf den Wert UL gebracht wird. Sollte das Leitungssystem und die beteiligten Komponenten (PV-Anlage, Wechselrichter etc.) für nennenswerte Ausgleichsströme ausgelegt sein, so kann der Zwischenschritt nach der Figur 4c entfallen. Nach dem Schließen des Trennschalters TS wird die Spannung über der Batteriebank 9 möglicherweise etwas reduziert werden, da der reine Leerlauffall wegfällt.

Im nächsten, mit Hilfe der Figur 4d erläuterter Schritt, wird die Spannung am MPP - Regelelement auf einen Wert gesetzt, der kleiner ist als die nach der Zuschaltung herrschende Leerlaufspannung U_{L} über der Batteriebank 9. Dies soll beim Ausführungsbeispiel die Spannung U₂ sein. Dadurch wird eine noch größere Entfernung vom MPP bewirkt, was aber hingenommen wird. Die kleine Spannung U₂ provoziert einen Entladestrom I_{entlade} aus der Batteriebank 9 heraus, der sich zum Strom I₂ der Photovoltaikanlage 1 addiert. Beide Ströme I_{entlade} und I₂ werden gemeinsam in den Wechselrichter 5 eingespeist und als Wechselstrom an das Netz 7 weitergegeben. Dabei stellt die Summe der beiden Ströme I_{entlade} und I₂ sicher, dass wieder eine Gesamtleistung P_{gesamt} oberhalb der Mindestleistung an den Wechselrichter 5 abgegeben werden kann.

In dem Strompfad zur PV-Anlage 1 ist ein zweiter Strommesssensor 21 vorgesehen, der den I_{PV} misst. Eine Erhöhung der Sonneneinstrahlung wird, da eine einhergehende Temperaturerhöhung am Halbleiter erst sehr viel später folgt, direkt in einen Anstieg des PV-Anlagenstroms I_{PV} führen. Ist dieser Anstieg hinreichend groß, kann der Trennschalter TS wieder geöffnet werden und der Regelalgorithmus auf den MPP hin kann, anstelle auf der Beibehaltung auf den fixen, fehlangepassten Spannungswert U₂, wieder eingesetzt werden. Je nach Entladezustand der Batteriebank 9 und der Größe der wieder zur Verfügung stehenden PV-Leistung kann der Trennschalter TS auch zunächst geschlossen bleiben, um die Batteriebank 9 über die PV-Anlage 1 aufzuladen. Der Trennschalter TS wird dann erst später geöffnet, wenn wieder ein zufriedenstellender Ladezustand der Batteriebank 9 erreicht ist. Es soll noch angemerkt werden, dass zusätzlich zu oder anstelle des zweiten Strommesssensors 21 auch eine Diode mit Durchflussrichtung zum Wechselrichter hin vorgesehen sein kann.

Bei einer hohen Beanspruchung der Batteriebank 9 über einen Tag hinweg, kann es vorkommen, dass gegen Abend nicht mehr genug PV-generierte Energie zur Aufladung zur Verfügung steht. Um die Batteriebank 9 am nächsten Morgen wieder voll aufgeladen vorzufinden, ist ein Ladegerät 23 vorgesehen, welches vom Netz 7 gespeist wird.

Durch die beschriebene Maßnahme wird erreicht, dass bei Abfall der PV-Anlage 1 unter die Mindestleistung, aus der Batteriebank 9 heraus der Fehlbetrag eingespeist werden kann, und dies ohne Unterbrechung. Da die Batteriebank 9 nur über einen beschränkten Zeitraum von einigen Minuten den Fehlbetrag an Energie ausgleichen kann, ist es sinnvoll, ein Ersatzkraftwerk zur Einspeisung ins Netz 7 vorzubereiten, sobald sich abzeichnet, dass die bei der Photovoltaikanlage 1 vorliegende Unterschreitung der Mindestleistung nicht nur vorübergehender Natur ist, wie z.B. eine einzelne vorbeiziehende Wolke. Insofern sollte das Zuschalten der Batteriebank 9 mit dem Anfahren eines Ersatzkraftwerks oder dem Zuschaltvorgang eines bereits laufenden Ersatzkraftwerks verbunden werden. Das Ersatzkraftwerk ist zur Lieferung von Gleichstrom geeignet und kann dabei ein herkömmlicher Dieselgenerator mit Gleichrichter sein, der in ca. 1 Minute die ergänzende Leistung zur Verfügung stellen kann, oder aber eine Gasturbine, deren Vorbereitung zur Einspeiseunterstützung nur wenige Minuten beträgt. Die Zeitspanne, die zwischen der Anforderung durch die Steuer- und Regeleinheit 15 bis zum eigentlichen Zuschalten des Aggregats auf den Wechselrichter 5 vergeht, liegt also vorteilhafter Weise zwischen 1 und 5 Minuten, insbesondere zwischen 2 und 4 Minuten. In der Figur 3 ist noch ein weiterer Trennschalter 25 gezeigt, mit dessen Hilfe die Photovoltaikanlage 1 vom Wechselrichter 5 getrennt werden kann. Dies ermöglicht es, den Wechselrichter 5 selber im Rückwärtsbetrieb als Ladegerät zu verwenden.

Ein mögliches Kriterium kann sein, dass das Produkt aus der von den PhotovoltaikModulen erzeugter elektrischer Leistung und einer Zeitspanne (also das Integral über die Leistung) einen vorwählbaren Mindestwert unterschreitet. Es sind weitere Kriterien vorstellbar, die die Natur des beobachteten Leistungsabfalls der Photovoltaikanlage berücksichtigen, wie z.B. harte Schatten - Licht Wechsel, Schäfchenwolken, Hochnebel etc. Wenn die photovoltaisch erzeugte Energie aufgrund des Netzzustands nicht benötigt wird, kann sie zu einem Laden der Batteriebank 9 herangezogen werden, wodurch sich die am Ausgang des Wechselrichters 5 abgegebene Leistung entsprechend verringert.

### Bezugszeichenliste

- 1: PV-Generator
- 3,3': Eingangsklemme
- 5,5': Wechselrichter
- 7: Versorgungsnetz
- 9,9': Batteriebank
- 11: Schnittstelle
- 13: Strommesssensor
- 15: Steuer- und Regeleinheit
- 17: Signalleitung
- 19: Spannungsmessgerät
- 21: zweiter Strommesssensor
- 23: Ladegerät
- 25: weiterer Trennschalter
- TS: Trennschalter

## Patentansprüche

1. Verfahren zum Betrieb einer Photovoltaikanlage mit einem Wechselrichter (5), an dessen Eingangsklemmen (3,3') die Ausgangsgleichspannung des Photovoltaikgenerators (1) gelegt ist und dessen Ausgang mit einem Versorgungsnetz (7) verbindbar ist, und
mit einer parallel zu den Eingangsklemmen geschalteten Batteriebank (9), wobei der Wechselrichter mit einem Regelelement zum Einstellen des maximalen Leistungspunkts (MPP) des Photovoltaikgenerators (1) versehen ist,
**dadurch gekennzeichnet, dass** der Photovoltaikgenerator (1), unter Ausschaltung der ansonsten eingestellten Regelung auf den maximalen Leistungspunkt zu, gezielt fehl angepasst betrieben wird, um im Falle einer nicht erreichten vorgebbaren Mindestleistung des Photovoltaikgenerators (1) einen Entladestrom aus der Batteriebank zu den Eingangsklemmen des Wechselrichters hin zu provozieren,
dass die Fehlanpassung eingeleitet wird, indem zunächst derjenige Spannungspunkt eingestellt wird, der im Wesentlichen der aktuellen Spannung über der Batteriebank entspricht, anschließend ein Trennschalter (TS), der im Strompfad der Anschlussleitung der Batteriebank an den Wechselrichter liegt, geschlossen wird, und schließlich der Arbeitspunkt des MPP - Regelelements auf einen Spannungswert kleiner als die aktuelle Spannung der Batteriebank gesetzt wird.

2. Verfahren nach Anspruch 1, **dadurch gekennzeichnet, dass** der von der PV-Anlage generierte Strom mittels eines ersten Strommesssensors gemessen wird und die Fehlanpassung beendet wird, wenn der vom ersten Strommesssensor gemessene Strom einen Grenzwert überschreitet, der in Abhängigkeit der Mindestleistung vorgegeben wird.

3. Verfahren nach Anspruch 2, **dadurch gekennzeichnet, dass** nach der Beendigung der Fehlanpassung der Trennschalter zum Zwecke der Aufladung der Batteriebank geöffnet bleibt, bis ein vorgebbarer Ladungszustand der Batteriebank festgestellt wird.

4. Verfahren nach einem der Ansprüche 1 bis 3, **dadurch gekennzeichnet, dass** in der Zuleitung zwischen der Batteriebank und dem Wechselrichter ein zweiter Strommesssensor vorgesehen ist und dass bei Unterschreiten eines vorgegebenen Ladezustands der Batteriebank die Zuschaltung eines Ersatzkraftwerkes auf das Versorgungsnetz eingeleitet wird.

5. Vorrichtung zum Betrieb eines Photovoltaikgenerators (1) wobei die Vorrichtung einen Wechselrichter (5) umfasst, an dessen Eingangsklemmen (3,3') die Ausgangsgleichspannung des Photovoltaikgenerators (1) gelegt ist und dessen Ausgang mit einem Versorgungsnetz (7) verbindbar ist, und mit einer parallel zu den Eingangsklemmen geschalteten Batteriebank (9), wobei der Wechselrichter mit einem Regelelement zum Einstellen des maximalen Leistungspunkts (MPP) des Photovoltaikgenerators (1) versehen ist, **dadurch gekennzeichnet, dass** die Batteriebank (9) über einen Trennschalter (TS) mit dem Wechselrichter verbunden ist und die Vorrichtung eine Steuer- und Regeleinrichtung (15) aufweist, die konfiguriert ist, den maximalen Leistungspunkt (MPP) durch das MPP -Regelelement auf eine vorgebbare Spannung zu setzen und den Trennschalter bei Unterschreiten einer vorgegebenen Mindestleistung der Photovoltaikanlage zu schließen, wobei in dem Strompfad der Batteriebank zum Wechselrichter ein erster Strommesssensor und im Strompfad zwischen dem Wechselrichter und des Photovoltaikgenerators (1) ein zweiter Strommesssensor oder eine Diode vorgesehen sind.

6. Vorrichtung nach Anspruch 5, **dadurch gekennzeichnet, dass** die Steuereinheit (15) in Zusammenwirken mit dem MPP -Regelelement des Wechselrichters (5) die Gleichspannung an den Eingangsklemmen (3,3') so einstellt, dass ein vorgegebener Strom aus oder zur Batteriebank (9) fließt.

## Claims

1. A method for operating a photovoltaic system having an inverter (5), wherein the output direct voltage of the photovoltaic generator (1) is applied to the input terminals (3, 3') of said inverter and the output of said inverter can be connected to a supply network (7), and
comprising a battery bank connected in parallel with the input terminals (9), wherein the inverter is provided with a regulating element for setting the maximum power point (MPP) of the photovoltaic generator (1),
**characterised in that** the photovoltaic generator (1) is operated in a targeted mismatched manner, while the otherwise set regulation to the maximum power point is disconnected, in order to trigger a discharge current from the battery bank to the input terminals of the inverter in the event of a predeterminable minimum power of the photovoltaic generator (1) not being reached,
that the mismatch is initiated **in that** initially the voltage point which substantially corresponds to the current voltage across the battery bank is set, then a disconnecting switch (TS) which rests on the inverter in the current path of the connection line of the battery bank is closed, and finally the operating point of the MPP-regulating element is set to a voltage value lower than the current voltage of the battery bank.

2. The method according to claim 1, **characterised in that** the current generated by the PV system is measured by means of a first current sensor and the mismatch is terminated when the current measured by the first current sensor exceeds a limit value which is predetermined as a function of the minimum power.

3. The method according to claim 2, **characterised in that** after the mismatch is terminated, the disconnecting switch remains open for the purpose of charging the battery bank until a predeterminable charge state of the battery bank is established.

4. The method according to one of claims 1 to 3, **characterised in that** a second current sensor is provided in the supply line between the battery bank and the inverter, and **in that** when there is a fall below a predetermined charge state of the battery bank, the connection of a backup power plant to the supply network is initiated.

5. An apparatus for operating a photovoltaic generator (1), wherein the apparatus comprises an inverter (5), and wherein the direct voltage of the photovoltaic generator (1) is applied to the input terminals (3, 3') of said inverter and the output of said inverter can be connected to a supply network (7), and comprising a battery bank (9) which is connected in parallel with the input terminals, wherein the inverter is provided with a regulating element for setting the maximum power point (MPP) of the photovoltaic generator (1), **characterised in that** the battery bank (9) is connected via a disconnecting switch (TS) to the inverter, and the device has a control and regulating device (15) which is configured to set the maximum power point (MPP) by means of the MPP-regulating element to a predeterminable voltage and to close the disconnecting switch when there is a fall below a predetermined minimum power of the photovoltaic system, wherein a first current sensor is provided in the current path of the battery bank to the inverter and a second current sensor or a diode is provided in the current path between the inverter and the photovoltaic generator (1).

6. The apparatus according to claim 5, **characterised in that** the control unit (15) sets the direct voltage on the input terminals (3, 3') by interacting with the MPP-regulating element of the inverter (5) such that a predetermined current flows out of or to the battery bank (9).

## Revendications

1. Procédé d'opération d'une installation photovoltaïque avec un onduleur (5), sur les bornes d'entrée (3, 3') duquel la tension continue de sortie du générateur photovoltaïque (1) est appliquée et dont la sortie peut être reliée à un réseau de distribution (7) et
avec un banc de batteries (9) relié en parallèle aux bornes d'entrée, l'onduleur étant doté d'un élément de régulation pour le réglage du point de puissance maximum (MPP) du générateur photovoltaïque (1),
**caractérisé en ce que** le générateur photovoltaïque (1), lors de la coupure de la régulation autrement configurée sur le point de puissance maximum, est opéré de manière désadaptée ciblée, afin de provoquer, au cas où une puissance minimum du générateur photovoltaïque (1) pouvant être définie au préalable n'est pas atteinte, un courant de décharge depuis le banc de batteries vers les bornes d'entrée de l'onduleur,
**en ce que** la désadaptation est amorcée, **en ce que**, d'abord, le point de tension qui correspond essentiellement à la tension actuelle peut être réglé par le biais du banc de batteries, ensuite un coupe-circuit (TS), qui se trouve dans le chemin de courant de la conduite de raccordement vers l'onduleur, est fermé et enfin le point de travail de l'élément de régulation du MPP, est réglé sur une valeur de tension inférieure à la tension actuelle du banc de batteries.

2. Procédé selon la revendication 1, **caractérisé en ce que** le courant généré par l'installation photovoltaïque est mesurée au moyen d'un premier capteur de mesure de courant et la désadaptation est terminée lorsque le courant mesuré par le premier capteur de mesure de courant dépasse une valeur limite, qui est prédéfinie en fonction de la puissance minimum.

3. Procédé selon la revendication 2, **caractérisé en ce que**, après achèvement de la désadaptation, le coupe-circuit reste ouvert à des fins de chargement du banc de batteries, jusqu'à ce qu'un état de charge pouvant être prédéfini du banc de batteries soit observé.

4. Procédé selon une des revendications 1 à 3, **caractérisé en ce que**, dans la conduite d'alimentation entre le banc de batteries et l'onduleur, un second capteur de mesure de tension est prévu et **en ce que**, lorsque l'état de charge du banc de batterie passe en dessous d'un état prédéfini, la connexion à une centrale de remplacement sur le réseau de distribution est amorcé.

5. Dispositif d'opération d'un générateur photovoltaïque (1), le dispositif comprenant un onduleur (5), aux bornes d'entrée (3, 3') duquel la tension de sortie continue du générateur photovoltaïque (1) est appliquée et dont la sortie peut être reliée à un réseau de distribution (7) et avec un banc de batteries (9) relié en parallèle aux bornes d'entrées, l'onduleur étant doté d'un élément de régulation pour le réglage du point de puissance maximum (MPP) du générateur photovoltaïque (1), **caractérisé en ce que** le banc de batteries (9) est relié à l'onduleur par le biais d'un coupe-circuit (TS) et le dispositif présente un dispositif de commande et de régulation (15), conçu pour régler le point de tension maximum (MPP) par le biais de l'élément de régulation du MPP sur une tension pouvant être définie au préalable et pour fermer le coupe-circuit lorsque la puissance de l'installation photovoltaïque passe en-dessous d'une puissance minimale prédéfinie, un premier capteur de mesure de courant étant prévu dans le chemin de courant du banc de batteries vers l'onduleur et un second capteur de mesure de courant ou une diode étant prévu(e) dans le chemin de courant entre l'onduleur et le générateur photovoltaïque (1).

6. Dispositif selon la revendication 5, **caractérisé en ce que** l'unité de commande (15), en coopération avec l'élément de régulation du MPP de l'onduleur (5) règle la tension continue au niveau des bornes d'entrée (3, 3') de sorte qu'un courant prédéfini circule depuis ou vers le banc de batteries (9).
